# EUROPEAN PATENT APPLICATION

(11) **EP 4 844 896 A1**
(43) Date of publication of application: **25.11.2026**
(21) Application number: 25889631.5
(22) Date of filing: 10.06.2025
(51) Int. Cl.: H01M 50/105, H01M 10/04, H01M 50/183, B65H 35/00

(54) **APPARATUS AND METHOD FOR MANUFACTURING POUCH FOR SECONDARY BATTERY**

(30) Priority: 11.11.2024 KR 20240159339
(71) Applicant: LG Energy Solution, Ltd., Seoul 07335 (KR)
(72) Inventor: HYUN, Je Min, Daejeon 34122 (KR); KIM, Seong Yong, Daejeon 34122 (KR); MOON, Gun Ho, Daejeon 34122 (KR); KIM, Sang Jih, Daejeon 34122 (KR); OH, Sung Hun, Daejeon 34122 (KR)
(74) Representative: Plasseraud IP
(86) International application number: PCT/KR2025/007898
(87) International publication number: WO 2026/100873

(57) **Abstract**

The present disclosure relates to an apparatus for manufacturing a pouch for a secondary battery including a pouch body and a sealing portion, and the apparatus for manufacturing a pouch for a secondary battery may include a pressure portion provided to selectively press the sealing portion of the pouch for a secondary battery along a vertical direction so that the sealing portion is bent toward the vertical direction orthogonal to the horizontal direction, and selectively press the sealing portion along the horizontal direction so that the bent sealing portion moves in a direction approaching the pouch body; and an adhesive tape supply unit that supplies an adhesive tape to a target adhesive surface of the sealing portion facing the side surface of the pouch body, wherein the adhesive tape may be adhered between the target adhesive surface and the side surface of the pouch body as the sealing portion is pressed in the horizontal direction by the pressure portion, thereby obtaining the advantageous effects of simplifying the structure and manufacturing process, and improving space utilization and design freedom.

## Description

### TECHNICAL FIELD

### CROSS-REFERENCE TO RELATED APPLICATIONS

The present application is based on and claims priority from Korean Patent Application No. 10-2024-0159339, filed on November 11, 2024, with the Korean Intellectual Property Office, the disclosure of which is incorporated herein in its entirety by reference.

### TECHNICAL FIELD

The present disclosure relates to an apparatus and method for manufacturing a pouch for a secondary battery, and more specifically, to an apparatus and method for manufacturing a pouch for a secondary battery capable of simplifying the structure and manufacturing process and improving process efficiency and productivity.

### BACKGROUND ART

In general, types of secondary batteries include nickel cadmium batteries, nickel hydrogen batteries, lithium-ion batteries, and lithium-ion polymer batteries. These secondary batteries are applied and used not only in small products such as digital cameras, P-DVDs, MP3Ps, mobile phones, PDAs, portable game devices, power tools, and E-bikes, but also in large products requiring high power such as electric vehicles or hybrid vehicles, in power storage devices that store surplus generated power or renewable energy, and in power storage devices for backup.

To manufacture such a secondary battery, an electrode active material slurry is first applied to a positive electrode current collector and a negative electrode current collector to manufacture a positive electrode and a negative electrode, which are then stacked on both sides of a separator to form an electrode assembly having a predetermined shape. And, the electrode assembly is accommodated in a battery case, an electrolyte solution (electrolyte) is injected, and then the battery case is sealed.

The secondary battery may be classified into a pouch type and a can type, depending on the material of the case that accommodates the electrode assembly.

Among them, the pouch type is configured to accommodate the electrode assembly in a pouch made of a flexible polymer material.

The electrode assembly is formed by winding or stacking the positive electrode and the negative electrode in one direction with a separator therebetween, and the pouch may be provided by bonding a lower sheet and an upper sheet that define a receiving space for accommodating the electrode assembly therein in a mutually cooperative manner.

Meanwhile, the pouch may be manufactured by bonding the side portions (edges) of the lower sheet and the upper sheet, and as the side portions of the lower sheet and the upper sheet are bonded, a sealing portion is formed on the side (edge side surface) of the pouch.

However, conventionally, the sealing portion is formed on the side of the pouch, so that additional space should be secured to dispose the sealing portion, which reduces space utilization and design freedom, and makes it difficult to maximize the volumetric efficiency or volumetric energy density of the secondary battery.

Thus, conventionally, in order to minimize the dead volume occupied by the sealing portion of the pouch, a method in which the sealing portion of the pouch is folded (bent) and then the folded sealing portion is fixed to the pouch using an adhesive (e.g., double-sided tape) has been proposed.

However, conventionally, the folding process and bonding process of the sealing portion of the pouch are performed individually by a separate folding device and bonding device, thereby complicating the structure and manufacturing process, reducing the space utilization and design freedom, and deteriorating the process efficiency and productivity.

Accordingly, various studies have been conducted recently to simplify the folding process and bonding process of the sealing portion of the pouch and to improve space utilization and design freedom, but they are still insufficient, and further development is required.

### SUMMARY

### TECHNICAL PROBLEM

The embodiment of the present disclosure is directed to providing an apparatus and method for manufacturing a pouch for a secondary battery capable of simplifying the structure and manufacturing process, and improving space utilization and design freedom.

In particular, the embodiment of the present disclosure is directed to simplifying the structure of a manufacturing apparatus for performing the folding process and bonding process for the sealing portion of the pouch, and improving space utilization and design freedom.

Above all, the embodiment of the present disclosure is directed to performing the bonding process of the sealing portion by using a pressure portion that folds (bends) the sealing portion of the pouch, without individually providing a separate folding device and bonding device for folding and bonding the sealing portion.

Additionally, the embodiment of the present disclosure is directed to reducing the amount of adhesive tape used and minimizing misassembly of the adhesive tape.

Additionally, the embodiment of the present disclosure is directed to standardizing the size and shape of the pouch and shortening the manufacturing time of the pouch.

Additionally, the embodiment of the present disclosure is directed to improving the folding and bonding uniformity of the sealing portion, and improving stability and reliability.

The problem to be solved in the embodiment is not limited thereto, and it can be said that the purpose or effect that may be identified from the method of solution or embodiment of the problem described below is also included.

### TECHNICAL SOLUTION

According to a preferred embodiment of the present disclosure for achieving the objects of the present disclosure described above, an apparatus for manufacturing a pouch for a secondary battery including a pouch body and a sealing portion includes a pressure portion provided to selectively press the sealing portion of the pouch for a secondary battery along a vertical direction so that the sealing portion is bent toward the vertical direction orthogonal to the horizontal direction, and selectively press the sealing portion along the horizontal direction so that the bent sealing portion moves in a direction approaching the pouch body; and an adhesive tape supply unit that supplies an adhesive tape to a target adhesive surface of the sealing portion facing the side surface of the pouch body, wherein the adhesive tape is adhered between the target adhesive surface and the side surface of the pouch body as the sealing portion is pressed in the horizontal direction by the pressure portion.

This is to simplify the structure and manufacturing process of the apparatus for manufacturing a pouch for a secondary battery, and to improve space utilization and design freedom.

That is, conventionally, the folding process and bonding process of the sealing portion of the pouch are performed individually by a separate folding device and bonding device, thereby complicating the structure and manufacturing process, reducing the space utilization and design freedom, and deteriorating the process efficiency and productivity.

Additionally, conventionally, the adhesive tape should be attached to cover the entire sealing portion in order to fix the folded sealing portion to the pouch, thereby not only increasing the amount of adhesive tape used, but also being difficult to simplify the process of attaching the adhesive tape.

However, by allowing the sealing portion to adhere to the pouch body by the pressure portion that folds (bends) the sealing portion with respect to the pouch body, the embodiment of the present disclosure may have the advantageous effects of simplifying the structure of a manufacturing apparatus for performing the folding process and bonding process for the sealing portion, and improving space utilization and design freedom.

Above all, according to the embodiment of the present disclosure, it is possible to perform the bonding process of the sealing portion (the process of supplying the adhesive tape to the sealing portion and bonding the adhesive tape to the side surface of the pouch body) together by using a pressure portion that folds (bends) the sealing portion of the pouch, without individually providing a separate folding device and bonding device for folding and bonding the sealing portion, thereby obtaining the advantageous effects of simplifying the structure and manufacturing process of the manufacturing apparatus, and improving space utilization and design freedom.

Additionally, according to the embodiment of the present disclosure, since the adhesive tape is supplied only to the target adhesive surface of the sealing portion in order to fix the folded sealing portion to the pouch, the amount of adhesive tape used may be reduced, and the adhesive tape may be attached only by relatively simple movement of the pressure portion (linear movement along the horizontal direction of the pressure portion), thereby obtaining the advantageous effects of simplifying the structure and manufacturing process, and improving productivity and production efficiency.

The pressure portion may be provided in various structures capable of pressing the sealing portion along the horizontal direction while pressing the sealing portion along the vertical direction.

According to a preferred embodiment of the present disclosure, the pressure portion may include a pressure member that is provided to be selectively linearly movable along the vertical direction and the horizontal direction.

According to a preferred embodiment of the present disclosure, the pressure member may be configured to move linearly along the horizontal direction and apply primary pressure to the sealing portion so that the target adhesive surface contacts a first adhesive surface of the adhesive tape while the sealing portion is bent, and then move linearly along the horizontal direction and apply secondary pressure to the sealing portion so that a second adhesive surface of the adhesive tape adheres to the side surface of the pouch body.

According to a preferred embodiment of the present disclosure, the sealing portion may include a first sealing portion protruding from the pouch body along the horizontal direction; and a second sealing portion connected to an end of the first sealing portion in a bent manner and defining the target adhesive surface, wherein when the pressure member moves in the vertical direction, the first sealing portion may be bent by the pressure member, and the target adhesive surface of the second sealing portion may be disposed to face the side surface of the pouch body.

The adhesive tape supply unit may be provided in various structures capable of supplying the adhesive tape to the target adhesive surface of the sealing portion.

According to a preferred embodiment of the present disclosure, the adhesive tape supply unit may include a supply roll that supplies an adhesive tape fabric including the adhesive tape, a first release sheet laminated on the first adhesive surface, and a second release sheet laminated on the second adhesive surface; a fabric transfer unit that selectively transfers the adhesive tape fabric so that the adhesive tape fabric is selectively positioned between the target adhesive surface and the side surface of the pouch body; a first recovery roll that recovers the first release sheet from the adhesive tape fabric; and a second recovery roll that recovers the second release sheet from the adhesive tape fabric.

According to a preferred embodiment of the present disclosure, the adhesive tape may be cut into preset units and provided in plurality to be spaced apart along the length direction of the adhesive tape fabric.

In this way, according to the embodiment of the present disclosure, it is not necessary to replace the adhesive tape fabric one by one for each sealing portion of each pouch in order to supply the adhesive tape to the sealing portions of different pouches by including a plurality of adhesive tapes in only one adhesive tape fabric, thereby obtaining the advantageous effects of simplifying the structure and manufacturing process, and improving productivity and production efficiency.

According to a preferred embodiment of the present disclosure, the adhesive tape fabric may be provided in the form of a roll wound around the supply roll.

In this way, the embodiment of the present disclosure may obtain the advantageous effect of minimizing the equipment and space for supplying the adhesive tape fabric by winding and providing the adhesive tape fabric in the form of a roll.

The fabric transfer unit may be provided in various structures capable of selectively transferring the adhesive tape fabric.

According to a preferred embodiment of the present disclosure, the fabric transfer unit may include an elevating member that is selectively allowed to be raised and lowered from a first position disposed above the target adhesive surface to a second position positioned between the target adhesive surface and the side surface of the pouch body, wherein when the elevating member is lowered to the second position, the adhesive tape fabric may be pressed by the elevating member and may be transferred between the target adhesive surface and the side surface of the pouch body, and the adhesive tape may be disposed to face the target adhesive surface.

According to a preferred embodiment of the present disclosure, the elevating member may perform the role of supplying the adhesive tape (transferring the adhesive tape fabric) while also performing the role of supporting the folding of the sealing portion by the pressure member.

That is, according to a preferred embodiment of the present disclosure, the pressure member may be configured to move in the vertical direction and bend the sealing portion toward the vertical direction while the elevating member is lowered to the second position.

In this way, according to the embodiment of the present disclosure, while the elevating member is lowered to the second position, in other words, while the lower end of the elevating member contacts the upper surface of the sealing portion and supports the upper surface of the sealing portion, the pressure member moves in the vertical direction and presses the sealing portion, thereby obtaining the advantageous effect of accurately folding the sealing portion at the intended angle.

According to a preferred embodiment of the present disclosure, the elevating member may perform the role of transferring the adhesive tape fabric while also performing the role of stably transferring the adhesive tape to the target adhesive surface of the sealing portion.

That is, according to a preferred embodiment of the present disclosure, the pressure member may be configured to apply the primary pressure to the sealing portion to transfer the adhesive tape from the adhesive tape fabric to the target adhesive surface while the elevating member is lowered to the second position, and after the elevating member is raised to the first position, the pressure member may be configured to apply the secondary pressure to the sealing portion to bond the adhesive tape to the side surface of the pouch body.

In this way, according to the embodiment of the present disclosure, while the elevating member is lowered to the second position, in other words, while the rear of the adhesive tape facing the sealing portion is supported by the elevating member, it is possible to suppress the phenomenon in which the adhesive tape is not adhered to the sealing portion and is pushed backward (in the direction approaching the side surface of the pouch body) by the sealing portion during the process of transferring the adhesive tape to the sealing portion by allowing the sealing portion to contact the adhesive tape by the pressing force of the pressure member, thereby obtaining the advantageous effect of more stably transferring the adhesive tape to the sealing portion.

According to a preferred embodiment of the present disclosure, the apparatus for manufacturing a pouch for a secondary battery may include a support member facing the elevating member and supporting the bottom surface of the sealing portion.

In this way, according to the embodiment of the present disclosure, by supporting the bottom surface of the sealing portion corresponding to the elevating member via the support member, sagging and deformation of the sealing portion by the elevating member may be suppressed when the elevating member is lowered to the second position so as to contact the upper surface of the sealing portion, thereby obtaining the advantageous effects of accurately bending the sealing portion in a preset posture and accurately transferring the adhesive tape to the target adhesive surface of the sealing portion.

According to another preferred field of the present disclosure, a method for manufacturing a pouch for a secondary battery including a pouch body accommodating an electrode assembly therein and a sealing portion protruding from a side surface of the pouch body along a horizontal direction, includes a step of vertically pressing the sealing portion along a vertical direction using a pressure member that is provided to be selectively linearly movable along the vertical direction and the horizontal direction so that the sealing portion is bent toward the vertical direction orthogonal to the horizontal direction; a step of supplying an adhesive tape to a target adhesive surface of the sealing portion facing the side surface of the pouch body; and a step of horizontally pressing the sealing portion along the horizontal direction using the pressure member so that the bent sealing portion moves in a direction approaching the pouch body, wherein the adhesive tape is adhered between the target adhesive surface and the side surface of the pouch body as the sealing portion is pressed in the horizontal direction.

### ADVANTAGEOUS EFFECTS

As described above, according to the embodiment of the present disclosure, it is possible to obtain the advantageous effects of simplifying the structure and manufacturing process, and improving space utilization and design freedom.

In particular, according to the embodiment of the present disclosure, it is possible to obtain the advantageous effects of simplifying the structure of a manufacturing apparatus for performing the folding process and bonding process for the sealing portion of the pouch, and improving space utilization and design freedom.

Above all, according to the embodiment of the present disclosure, it is possible to perform the bonding process of the sealing portion by using a pressure portion that folds (bends) the sealing portion of the pouch, without individually providing a separate folding device and bonding device for folding and bonding the sealing portion.

Additionally, according to the embodiment of the present disclosure, it is possible to obtain the advantageous effects of reducing the amount of adhesive tape used and minimizing misassembly of the adhesive tape.

Additionally, according to the embodiment of the present disclosure, it is possible to obtain the advantageous effects of standardizing the size and shape of the pouch and shortening the manufacturing time of the pouch.

Additionally, according to the embodiment of the present disclosure, it is possible to obtain the advantageous effects of improving the folding and bonding uniformity of the sealing portion, and improving stability and reliability.

### BRIEF DESCRIPTION OF THE DRAWINGS

FIG. 1 is a view for describing an apparatus for manufacturing a pouch for a secondary battery according to an embodiment of the present disclosure.
FIG. 2 is a view for describing an adhesive tape fabric for an apparatus for manufacturing a pouch for a secondary battery according to an embodiment of the present disclosure.
FIG. 3 is a view for describing an adhesive tape supply unit for an apparatus for manufacturing a pouch for a secondary battery according to an embodiment of the present disclosure.
FIG. 4 is a view for describing an initial arrangement state of a pressure portion and an adhesive tape supply unit in an apparatus for manufacturing a pouch for a secondary battery according to an embodiment of the present disclosure.
FIG. 5 is a view for describing the descending state of an elevating member in an apparatus for manufacturing a pouch for a secondary battery according to an embodiment of the present disclosure.
FIG. 6 is a view for describing a folding process of a sealing portion in an apparatus for manufacturing a pouch for a secondary battery according to an embodiment of the present disclosure.
FIG. 7 is a view for describing a process of transferring an adhesive tape from an adhesive tape fabric to a sealing portion in an apparatus for manufacturing a pouch for a secondary battery according to an embodiment of the present disclosure.
FIG. 8 is a view for describing the ascending state of an elevating member in an apparatus for manufacturing a pouch for a secondary battery according to an embodiment of the present disclosure.
FIG. 9 is a view for describing a process of bonding an adhesive tape to a pouch body in an apparatus for manufacturing a pouch for a secondary battery according to an embodiment of the present disclosure.
FIG. 10 is a view for describing a pouch for a secondary battery manufactured by an apparatus for manufacturing a pouch for a secondary battery according to an embodiment of the present disclosure.

### DETAILED DESCRIPTION

Hereinafter, preferred embodiments of the present disclosure will be described in detail with reference to the accompanying drawings.

However, the technical idea of the present disclosure is not limited to some of the embodiments described, but may be implemented in various different forms, and within the scope of the technical idea of the present disclosure, one or more of the components may be selectively combined or substituted between the embodiments.

Additionally, the terms (including technical and scientific terms) used in the embodiments of the present disclosure may be construed as meanings generally understood by those having ordinary skill in the art to which the present disclosure pertains, unless explicitly specifically defined and described, and terms that are commonly used, such as terms defined in dictionaries, may be construed in consideration of the contextual meaning of the related technology.

Additionally, the terms used in the embodiments of the present disclosure are for the purpose of describing the embodiments and are not intended to limit the present disclosure.

In this specification, the singular form may include the plural form unless specifically stated in the phrase, and when described as "at least one (or more than one) of A, B, and C", it may include one or more of all combinations that can be combined with A, B, and C.

Additionally, in describing the components of the embodiments of the present disclosure, terms such as first, second, A, B, (a), (b), and the like may be used.

These terms are only intended to distinguish the components from other components, and do not limit the nature, order, or sequence of the corresponding components.

And, when a component is described as being 'connected', 'coupled', or 'contacted' to another component, this may include not only cases where the component is directly connected, coupled, or contacted to another component, but also cases where the component is 'connected', 'coupled', or 'contacted' to another component through a third component.

Additionally, when it is described as being formed or disposed "on top of (above) or on bottom of (below)" each component, the top (above) or bottom (below) may include not only cases where two components are in direct contact with each other, but also cases where one or more other components are formed or disposed between the two components. Additionally, when expressed as "on top of (above) or on bottom of (below)", this may include the meaning of not only the upward direction but also the downward direction based on one component.

### Embodiment 1

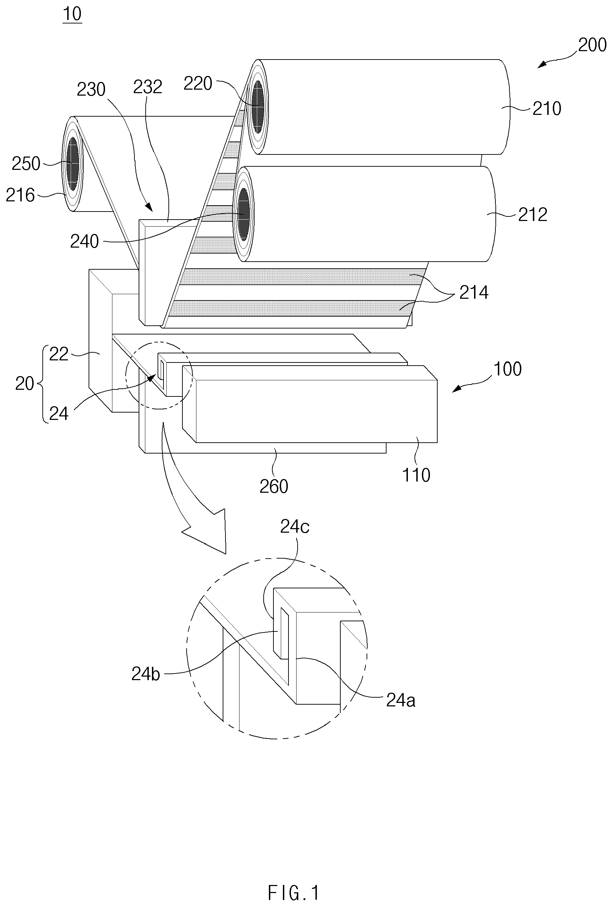

Referring to FIGS. 1 to 10, the present disclosure relates to an apparatus 10 for manufacturing a pouch 20 for a secondary battery including a pouch body 22 accommodating an electrode assembly 30 therein and a sealing portion 24 protruding from a side surface of the pouch body 22 along a horizontal direction D1, and the apparatus 10 for manufacturing a pouch for a secondary battery includes a pressure portion 100 provided to selectively press the sealing portion 24 of the pouch 20 for a secondary battery along a vertical direction D2 so that the sealing portion 24 is bent toward the vertical direction D2 orthogonal to the horizontal direction D1, and selectively press the sealing portion 24 along the horizontal direction D1 so that the bent sealing portion 24 moves in a direction approaching the pouch body 22; and an adhesive tape supply unit 200 that supplies an adhesive tape 214 to a target adhesive surface 24c of the sealing portion 24 facing the side surface of the pouch body 22, wherein the adhesive tape 214 is adhered between the target adhesive surface 24c and the side surface of the pouch body 22 as the sealing portion 24 is pressed in the horizontal direction D1 by the pressure portion 100.

For reference, the apparatus 10 for manufacturing a pouch for a secondary battery according to an embodiment of the present disclosure may be used to fold (bend) and bond the sealing portion 24 of the pouch 20, and the present disclosure is not limited or restricted by the type and structure of the pouch 20 used in the apparatus 10 for manufacturing a pouch for a secondary battery.

The pouch 20 may be provided in various structures including a pouch body 22 and a sealing portion 24, and the present disclosure is not limited or restricted by the structure and shape of the pouch 20.

The pouch body 22 accommodates the electrode assembly 30 therein and is provided to completely surround the perimeter of the electrode assembly 30.

The pouch body 22 may be provided in various structures capable of accommodating the electrode assembly 30 therein, and the present disclosure is not limited or restricted by the structure and shape of the pouch body 22.

For example, the pouch body 22 may be provided by bonding a lower sheet (not shown) and an upper sheet (not shown) having a roughly rectangular shape, and a receiving space in which the electrode assembly 30 is accommodated may be defined between the lower sheet and the upper sheet.

In the above-described and illustrated embodiment of the present disclosure, an example in which the pouch body 22 is configured to have a roughly rectangular shape is described, but according to another embodiment of the present disclosure, the pouch body may be configured to have a circular shape or other shapes.

In addition, the pouch body 22 may be configured to have a structure including a metal layer, such as an aluminum thin film or the like, in order to protect components such as an electrolyte injected into the pouch body 22 and to enhance supplementation and heat dissipation with respect to electrochemical properties by the electrode assembly 30 and the electrolyte.

For reference, the electrode assembly 30 may include an electrode (not shown) and a separator (not shown) laminated on the electrode.

For example, the electrode may include a first electrode (e.g., positive electrode) laminated on one surface (e.g., top surface) of the separator, and a second electrode (e.g., negative electrode) laminated on the other surface (e.g., bottom surface) of the separator.

The first electrode (positive electrode) and the second electrode (negative electrode) may be formed by applying a slurry obtained by mixing an electrode active material, a binder, and a plasticizer to a positive electrode current collector and a negative electrode current collector.

The positive electrode current collector is not particularly limited as long as it has conductivity without causing a chemical change in the battery. For example, stainless steel, aluminum, nickel, titanium, calcined carbon, or aluminum or stainless steel surface-treated with carbon, nickel, titanium, silver, or the like may be used as the positive electrode current collector.

The negative electrode current collector is not particularly limited as long as it has conductivity without causing a chemical change in the battery. For example, copper, stainless steel, aluminum, nickel, titanium, calcined carbon, or aluminum or stainless steel surface-treated with carbon, nickel, titanium, silver, or the like may be used as the negative electrode current collector. For example, a thin copper film (e.g., electrolytic copper foil or pressure copper foil) may be used as the negative electrode current collector.

The separator is designed to separate the negative electrode and the positive electrode and provide a passage for lithium ions to move, and may be used without any particular limitation as long as it is generally used as a separator in a lithium secondary battery.

For example, as a separator, a porous polymer film, for example, a porous polymer film made of a polyolefin-based polymer such as an ethylene homopolymer, a propylene homopolymer, an ethylene/butene copolymer, an ethylene/hexene copolymer, and an ethylene/methacrylate copolymer, or a stacked structure of two or more layers thereof may be used.

Alternatively, a conventional porous nonwoven fabric, for example, a nonwoven fabric made of high-melting-point glass fibers, polyethylene terephthalate fibers, or the like may be used as a separator, or a coated separator including a ceramic component or a polymer material may be used to ensure heat resistance or mechanical strength.

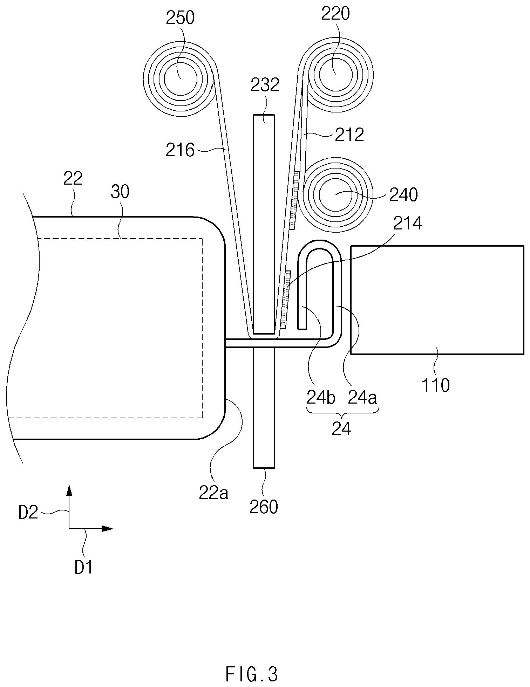

The sealing portion 24 may be formed by bonding the side portions (edges) of the lower sheet and the upper sheet constituting the pouch body 22, and is provided to protrude from the side surface of the pouch body 22 along the horizontal direction D1 (left-right direction based on FIG. 3).

For example, the sealing portion 24 may be formed along three or four sides of the pouch body 22. According to another embodiment of the present disclosure, the sealing portion may be configured to be formed along one or two sides of the pouch body.

The pressure portion 100 is provided to press the sealing portion 24 in a direction approaching the side surface of the pouch body 22 while pressing the sealing portion 24 to be folded (bent) with respect to the pouch body 22.

More specifically, the pressure portion 100 is provided to selectively press the sealing portion 24 along the vertical direction D2 so that the sealing portion 24 is bent (folded to form a roughly 'L' shape) toward the vertical direction D2 (upper-lower direction based on FIG. 3) orthogonal to the horizontal direction D1 (left-right direction based on FIG. 3), and selectively press the sealing portion 24 along the horizontal direction D1 so that the bent sealing portion 24 moves in a direction approaching the pouch body 22.

The pressure portion 100 may be provided in various structures capable of pressing the sealing portion 24 along the horizontal direction D1 while pressing the sealing portion 24 along the vertical direction D2, and the present disclosure is not limited or restricted by the structure of the pressure portion 100.

According to a preferred embodiment of the present disclosure, the pressure portion 100 may include only one pressure member 110 that is provided to be selectively linearly movable along the vertical direction D2 and the horizontal direction D1.

For example, the pressure member 110 may be configured to have a roughly rectangular block shape (cuboid shape). According to another embodiment of the present disclosure, the pressure member may be configured to have a spherical shape or other shapes.

In an embodiment of the present disclosure, the pressure member 110 linearly moving along the vertical direction D2 and the horizontal direction D1 is defined that the pressure member 110 may not only linearly move along the vertical direction D2 with respect to the pouch 20, but also linearly move along the horizontal direction D1 with respect to the pouch 20.

For reference, the linear movement of the pressure portion 100 along the vertical direction D2 and the horizontal direction D1 may be implemented in various ways according to the required conditions and design specifications.

For example, the linear movement of the pressure portion 100 along the vertical direction D2 and the horizontal direction D1 may be implemented by a conventional linear motion system such as a motor, a solenoid, or a linear motor. According to another embodiment of the present disclosure, the pressure portion may be configured to linearly move along the vertical direction and the horizontal direction in response to the rotation of the lead screw.

The pressure member 110 moves linearly along the vertical direction D2 (upper-lower direction) and presses the sealing portion 24 disposed in the horizontal direction D1, thereby folding the sealing portion 24 so that the sealing portion 24 faces approximately the vertical direction D2.

Additionally, the pressure member 110 may press the sealing portion 24 bent in the vertical direction D2 in the horizontal direction D1 (the direction approaching the pouch body 22).

According to a preferred embodiment of the present disclosure, the pressure member 110 may be configured to move linearly along the horizontal direction D1 and apply primary pressure to the sealing portion 24 so that the target adhesive surface 24c contacts a first adhesive surface 214a of the adhesive tape 214 while the sealing portion 24 is bent, and then move linearly along the horizontal direction D1 and apply secondary pressure to the sealing portion 24 so that a second adhesive surface 214b of the adhesive tape 214 adheres to the side surface of the pouch body 22.

For reference, while the pressure member 110 applies primary pressure to the sealing portion 24, the supply state of the adhesive tape 214 (the state in which the adhesive tape 214 is disposed between the sealing portion 24 and the side surface of the pouch body 22) may be supported by the elevating member 232 to be described later, and the pressure member 110 may apply secondary pressure to the sealing portion 24 after the elevating member 232 returns (ascends) to the upper position (first position).

According to a preferred embodiment of the present disclosure, the sealing portion 24 may include a first sealing portion 24a protruding from the pouch body 22 along the horizontal direction D1; and a second sealing portion 24b connected to an end of the first sealing portion 24a in a bent manner and defining the target adhesive surface 24c, wherein when the pressure member 110 moves in the vertical direction D2, the first sealing portion 24a may be bent by the pressure member 110, and the target adhesive surface 24c of the second sealing portion 24b may be disposed to face the side surface of the pouch body 22.

In the above-described and illustrated embodiment of the present disclosure, an example in which the sealing portion 24 is first folded to include the first sealing portion 24a and the second sealing portion 24b, and then secondarily folded again via the pressure member 110 is described, but according to another embodiment of the present disclosure, it is also possible to configure the pressure member to fold the non-folded sealing portion (e.g., a sealing portion including only the first sealing portion) or to additionally fold the sealing portion folded twice or more.

The adhesive tape 214 supply unit 200 is provided to supply the adhesive tape 214 to the target adhesive surface 24c of the sealing portion 24 facing the side surface of the pouch body 22.

The adhesive tape 214 supply unit 200 may be provided in various structures capable of supplying the adhesive tape 214 to the target adhesive surface 24c of the sealing portion 24, and the present disclosure is not limited or restricted by the structure of the adhesive tape 214 supply unit 200.

According to a preferred embodiment of the present disclosure, the adhesive tape 214 supply unit 200 includes a supply roll 220 that supplies an adhesive tape fabric 210 including the adhesive tape 214, a first release sheet 212 laminated on the first adhesive surface 214a, and a second release sheet 216 laminated on the second adhesive surface 214b; a fabric transfer unit 230 that selectively transfers the adhesive tape fabric 210 so that the adhesive tape fabric 210 is selectively positioned between the target adhesive surface 24c and the side surface of the pouch body 22; a first recovery roll 240 that recovers the first release sheet 212 from the adhesive tape fabric 210; and a second recovery roll 250 that recovers the second release sheet 216 from the adhesive tape fabric 210.

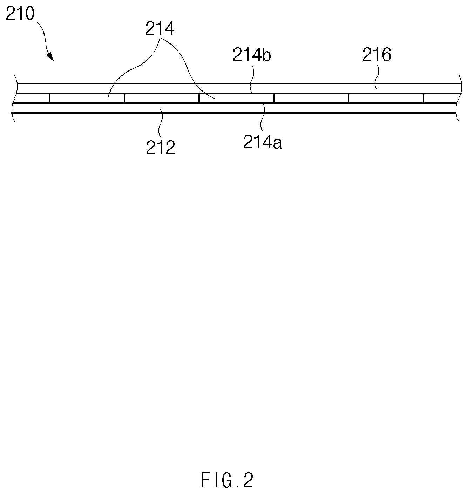

Referring to FIG. 2, the adhesive tape fabric 210 may include an adhesive tape 214, a first release sheet 212 laminated on a first adhesive surface 214a of the adhesive tape 214 (e.g., a bottom surface based on FIG. 2), and a second release sheet 216 laminated on a second adhesive surface 214b of the adhesive tape 214 (e.g., a top surface based on FIG. 2).

The adhesive tape 214 may be formed of various materials having adhesive properties on both surfaces, and the present disclosure is not limited or restricted by the material and characteristics of the adhesive tape 214. For example, the adhesive tape 214 may be formed of a conventional polyethylene foam, acrylic foam, PET, silicone, or the like.

The first release sheet 212 may be made of paper or film that may be easily separated from the adhesive tape 214 while protecting the first adhesive surface 214a of the adhesive tape 214. For example, a conventional release paper, glassine paper, film release paper, or the like may be used as the first release sheet 212.

The second release sheet 216 may be made of paper or film that may be easily separated from the adhesive tape 214 while protecting the second adhesive surface 214b of the adhesive tape 214. For example, a conventional release paper, glassine paper, film release paper, or the like may be used as the second release sheet 216.

According to a preferred embodiment of the present disclosure, the adhesive tape 214 may be cut into preset units (e.g., a length corresponding to the target adhesive surface 24c of the sealing portion 24) and provided in plurality to be spaced apart along the length direction of the adhesive tape fabric 210.

For example, the first release sheet 212 and the second release sheet 216 may be provided in the form of a continuous sheet (band) that is commonly laminated on the plurality of adhesive tapes 214. Alternatively, it is also possible to configure the first release sheet 212 and the second release sheet 216 that are individually cut for each adhesive tape 214 to be laminated.

In this way, according to the embodiment of the present disclosure, it is not necessary to replace the adhesive tape fabric 210 one by one for each sealing portion 24 of each pouch 20 in order to supply the adhesive tape 214 to the sealing portions 24 of different pouches 20 by including a plurality of adhesive tapes 214 in only one adhesive tape fabric 210, thereby obtaining the advantageous effects of simplifying the structure and manufacturing process, and improving productivity and production efficiency.

The supply roll 220 may supply the adhesive tape fabric 210 in various ways according to the required conditions and design specifications.

According to a preferred embodiment of the present disclosure, the adhesive tape fabric 210 may be provided in the form of a roll wound around the supply roll 220.

In this way, the embodiment of the present disclosure may obtain the advantageous effect of minimizing the equipment and space for supplying the adhesive tape fabric 210 by winding and providing the adhesive tape fabric 210 in the form of a roll. According to another embodiment of the present disclosure, it is also possible to supply the adhesive tape fabric in a straight line using a conventional conveyor or the like, without winding the adhesive tape fabric around a supply roll.

The first recovery roll 240 is provided to recover the first release sheet 212 from the adhesive tape fabric 210 supplied from the supply roll 220.

The first recovery roll 240 may be provided in various structures capable of recovering the first release sheet 212, and the present disclosure is not limited or restricted by the structure and recovery method of the first recovery roll 240.

For example, the first recovery roll 240 may be provided adjacent to the lower part of the supply roll 220, and the first release sheet 212 separated from the adhesive tape fabric 210 may be wound around the first recovery roll 240 in a roll-to-roll manner and recovered.

When the first release sheet 212 is separated from the adhesive tape fabric 210, the first adhesive surface 214a of the adhesive tape 214 may be exposed to the outside, and as the sealing portion 24 folded in the vertical direction D2 is pressed in the horizontal direction D1 (the direction approaching the side surface of the pouch body) by the pressure portion 100 and in contact with the first adhesive surface 214a of the adhesive tape 214, the adhesive tape 214 may be separated from the second release sheet and transferred to the target adhesive surface 24c of the sealing portion 24.

The second recovery roll 250 is provided to recover the second release sheet 216 from the adhesive tape fabric 210. That is, the second recovery roll 250 is provided to recover the second release sheet 216 after the adhesive tape 214 is transferred from the second release sheet 216 to the sealing portion 24.

The second recovery roll 250 may be provided in various structures capable of recovering the second release sheet 216, and the present disclosure is not limited or restricted by the structure and recovery method of the second recovery roll 250.

For example, the second recovery roll 250 may be provided to face the supply roll 220 and to be spaced apart at a predetermined interval, and the second release sheet 216 from which the adhesive tape 214 is separated (the second release sheet from which the adhesive tape is separated as the sealing portion contacts the adhesive tape by the pressure portion) may be wound around the second recovery roll 250 in a roll-to-roll manner and recovered.

In this way, according to the embodiment of the present disclosure, the first release sheet 212 and the second release sheet 216 may be recovered from the adhesive tape fabric 210 onto the first recovery roll 240 and the second recovery roll 250 in a roll-to-roll manner, thereby obtaining the advantageous effects of minimizing the equipment and space for recovering the first release sheet 212 and the second release sheet 216, and improving space utilization and design freedom.

The fabric transfer unit 230 is provided to selectively transfer the adhesive tape fabric 210 so that the adhesive tape fabric 210 is selectively positioned between the target adhesive surface 24c and the side surface of the pouch body 22.

Here, the adhesive tape fabric 210 being positioned between the target adhesive surface 24c and the side surface of the pouch body 22 may be defined that the adhesive tape 214 is disposed at a supply position facing the target adhesive surface 24c of the sealing portion 24.

The fabric transfer unit 230 may be provided in various structures capable of selectively transferring the adhesive tape fabric 210, and the present disclosure is not limited or restricted by the structure of the fabric transfer unit 230.

According to a preferred embodiment of the present disclosure, the fabric transfer unit 230 may include an elevating member 232 that is selectively allowed to be raised and lowered from a first position disposed above the target adhesive surface 24c to a second position positioned between the target adhesive surface 24c and the side surface of the pouch body 22, wherein when the elevating member 232 is lowered to the second position, the adhesive tape fabric 210 may be pressed by the elevating member 232 and may be transferred between the target adhesive surface 24c and the side surface of the pouch body 22, and the adhesive tape 214 may be disposed to face the target adhesive surface 24c.

The elevating member 232 may be provided in various structures according to required conditions and design specifications, and the present disclosure is not limited or restricted by the structure and shape of the elevating member 232.

For example, the elevating member 232 may be formed to have a roughly rectangular plate shape. Alternatively, the elevating member 232 may be configured to have a straight bar (straight rod) shape or other shapes.

With this structure, when the adhesive tape fabric 210 is supplied from the supply roll 220 and the elevating member 232 is lowered to the second position simultaneously, the second release sheet 216 may be bent in a roughly 'V' shape, and the adhesive tape 214 may be disposed to face the target adhesive surface 24c between the side surface of the pouch body 22 and the sealing portion 24.

On the other hand, after the adhesive tape 214 is transferred to the target adhesive surface 24c of the sealing portion 24, the second recovery roll 250 may wind and recover the second release sheet 216, and at the same time, the elevating member 232 may ascend (return) to the first position.

According to a preferred embodiment of the present disclosure, the elevating member 232 may perform the role of supplying the adhesive tape 214 (transferring the adhesive tape fabric) while also performing the role of supporting the folding of the sealing portion 24 by the pressure member 110.

That is, according to a preferred embodiment of the present disclosure, the pressure member 110 may be configured to move in the vertical direction D2 and bend the sealing portion 24 toward the vertical direction D2 while the elevating member 232 is lowered to the second position.

In this way, according to the embodiment of the present disclosure, while the elevating member 232 is lowered to the second position, in other words, while the lower end of the elevating member 232 contacts the upper surface of the sealing portion 24 and supports the upper surface of the sealing portion 24, the pressure member 110 moves in the vertical direction D2 to press the sealing portion 24, thereby obtaining the advantageous effect of accurately folding the sealing portion 24 at the intended angle (e.g., L-shape).

Additionally, the elevating member 232 may perform the role of transferring the adhesive tape fabric 210 (descending in a state where the second release sheet is bent) while also performing the role of stably transferring the adhesive tape 214 to the target adhesive surface 24c of the sealing portion 24.

That is, according to a preferred embodiment of the present disclosure, the pressure member 110 may be configured to apply the primary pressure to the sealing portion 24 to transfer the adhesive tape 241 from the adhesive tape fabric 210 to the target adhesive surface 24c while the elevating member 232 is lowered to the second position, and after the elevating member 232 is raised to the first position, the pressure member 110 may be configured to apply the secondary pressure to the sealing portion 24 to bond the adhesive tape 214 to the side surface of the pouch body 22.

In this way, according to the embodiment of the present disclosure, while the elevating member 232 is lowered to the second position, in other words, while the rear of the adhesive tape 214 facing the sealing portion 24 (or the pressure member) is supported by the elevating member 232, it is possible to suppress the phenomenon in which the adhesive tape 214 is not adhered to the sealing portion 24 and is pushed backward (in the direction approaching the side surface of the pouch body) by the sealing portion 24 during the process of transferring the adhesive tape 214 to the sealing portion 24 by allowing the sealing portion 24 to contact the adhesive tape 214 by the pressing force (pressing force applied by the primary pressure) of the pressure member 110, thereby obtaining the advantageous effect of more stably transferring the adhesive tape 214 to the sealing portion 24.

Referring to FIGS. 1, 6, and 7, according to a preferred embodiment of the present disclosure, the apparatus 10 for manufacturing a pouch for a secondary battery may include a support member 260 facing the elevating member 232 and supporting the bottom surface of the sealing member 24.

The support member 260 may be provided in various structures capable of facing the elevating member 232 and supporting the bottom surface of the sealing member 24, and the present disclosure is not limited or restricted by the structure and shape of the support member 260.

For example, the support member 260 may be formed in a roughly rectangular plate shape having a width (thickness) corresponding to the elevating member 232. According to another embodiment of the present disclosure, it is also possible to configure the elevating member to have a smaller or larger width than the support member. Alternatively, it is also possible to configure a plurality of support members to cooperatively support the bottom surface of the sealing portion corresponding to the elevating member.

In this way, according to the embodiment of the present disclosure, by supporting the bottom surface of the sealing portion 24 corresponding to the elevating member 232 via the support member 260, sagging and deformation of the sealing portion 24 by the elevating member 232 may be suppressed when the elevating member 232 is lowered to the second position so as to contact the upper surface of the sealing portion 24, thereby obtaining the advantageous effects of accurately bending the sealing portion 24 in a preset posture and accurately transferring the adhesive tape 214 to the target adhesive surface 24c of the sealing portion 24.

### Embodiment 2

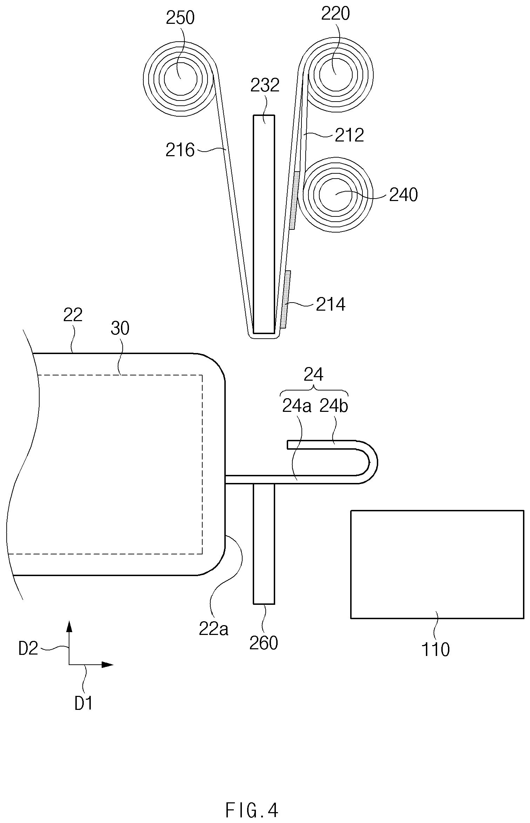

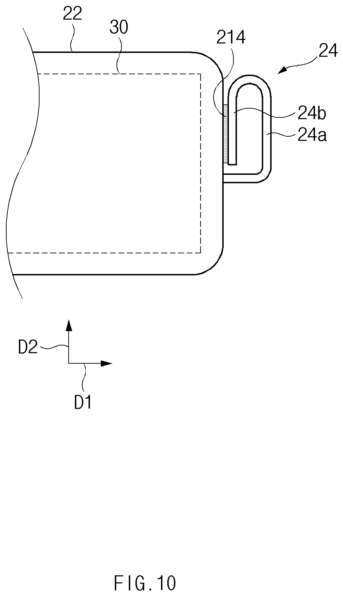

Hereinafter, a manufacturing process of a pouch 20 by the apparatus 10 for manufacturing a pouch for a secondary battery according to an embodiment of the present disclosure will be described with reference to FIGS. 4 to 9. Additionally, the pouch 20 manufactured by the apparatus 10 for manufacturing a pouch for a secondary battery according to an embodiment of the present disclosure may be confirmed through FIG. 10.

For reference, the common contents with Embodiment 1 will be omitted as much as possible and the contents of Embodiment 2 will be described. That is, it is obvious that contents not described in Embodiment 2 may be considered as the contents of Embodiment 1 if necessary.

First, as shown in FIG. 4, a pouch 20 including a pouch body 22 and a sealing portion 24 protruding from the side surface of the pouch body 22 along the horizontal direction D1 is prepared.

According to a preferred embodiment of the present disclosure, the sealing portion 24 may include a first sealing portion 24a protruding from the pouch body 22 along the horizontal direction D1; and a second sealing portion 24b connected to an end of the first sealing portion 24a in a bent manner and defining the target adhesive surface 24c.

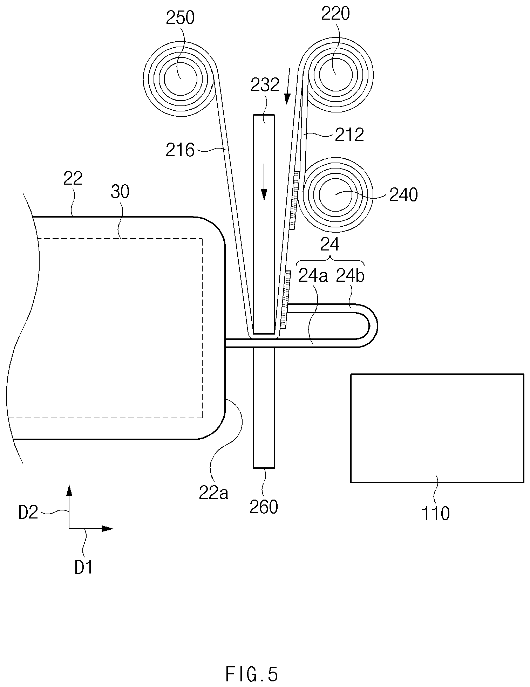

Next, as shown in FIG. 5, by supplying the adhesive tape fabric 210 from the supply roll 220 and simultaneously lowering the elevating member 232 to the second position, the second release sheet 216 may be bent in a roughly 'V' shape.

At this time, the first release sheet 212 separated from the adhesive tape fabric 210 supplied from the supply roll 220 may be wound around the first recovery roll 240 in a roll-to-roll manner and recovered.

Additionally, when the elevating member 232 is lowered to the second position, the bottom surface of the sealing portion 24 corresponding to the elevating member 232 may be supported by the support member 260.

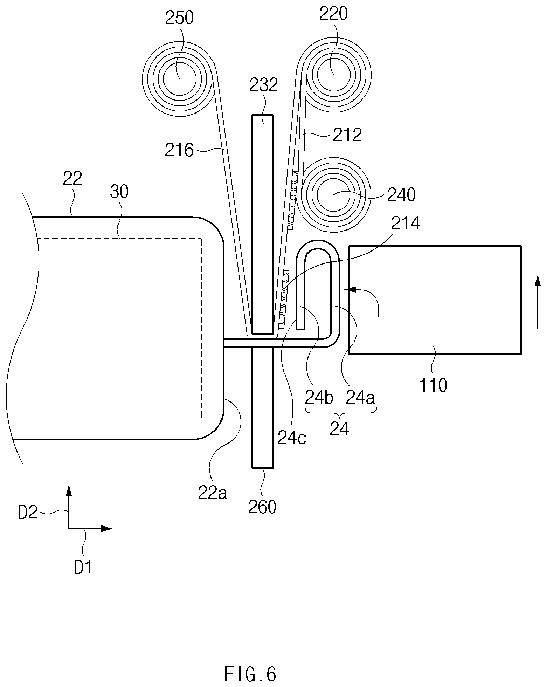

Next, as shown in FIG. 6, the pressure member 110 positioned below the sealing portion 24 moves linearly in the vertical direction D2 (upward direction) and presses the sealing portion 24, so that the sealing portion 24 may be bent (folded to form a roughly 'L' shape) toward the vertical direction D2 orthogonal to the horizontal direction D1.

At this time, the elevating member 232 may perform the role of supplying the adhesive tape 214 (transferring the adhesive tape fabric 210) while also performing the role of supporting the folding of the sealing portion 24 by the pressure member 110.

That is, the pressure member 110 is configured to move in the vertical direction D2 and bend the sealing portion 24 toward the vertical direction D2 while the elevating member 232 is lowered to the second position (while the lower end of the elevating member contacts the upper surface of the sealing portion and supports the upper surface of the sealing portion).

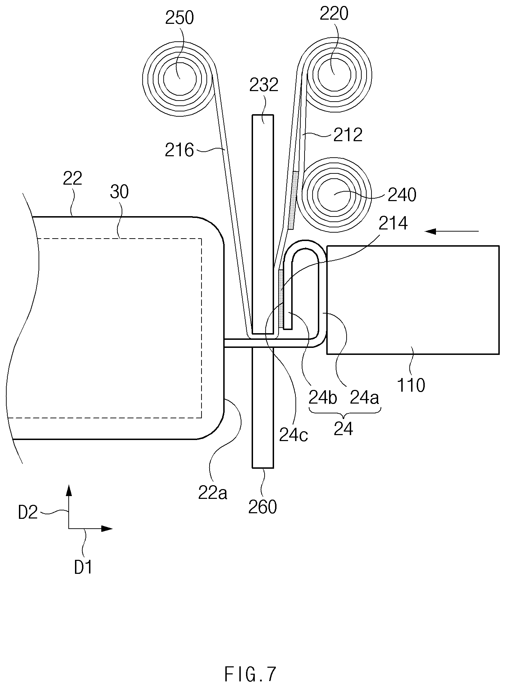

Next, as shown in FIG. 7, as the pressure member 110 disposed on the side of the bent sealing portion 24 moves linearly in the horizontal direction D1 (left-right direction) and presses (primary pressure) the sealing portion 24, the sealing portion 24 comes into contact with the adhesive tape 214, and thus the adhesive tape 214 of the adhesive tape fabric 210 may be transferred from the second release sheet 216 to the sealing portion 24.

At this time, the elevating member 232 may perform the role of transferring the adhesive tape fabric 210 (lowering the second release sheet in a bent state) while also performing the role of stably transferring the adhesive tape 214 to the target adhesive surface 24c of the sealing portion 24.

That is, the pressure member 110 is configured to apply the primary pressure to the sealing portion 24 to transfer the adhesive tape 241 from the adhesive tape fabric 210 to the target adhesive surface 24c of the sealing portion 24 while the elevating member 232 is lowered to the second position.

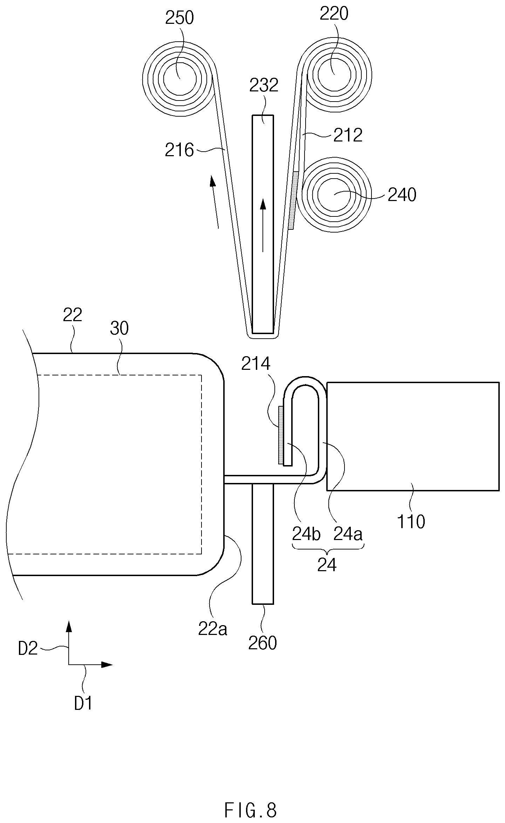

Next, as shown in FIG. 8, after the adhesive tape 214 is transferred to the target adhesive surface 24c of the sealing portion 24, the second recovery roll 250 winds and recovers the second release sheet 216, and at the same time, the elevating member 232 ascends (returns) to the first position.

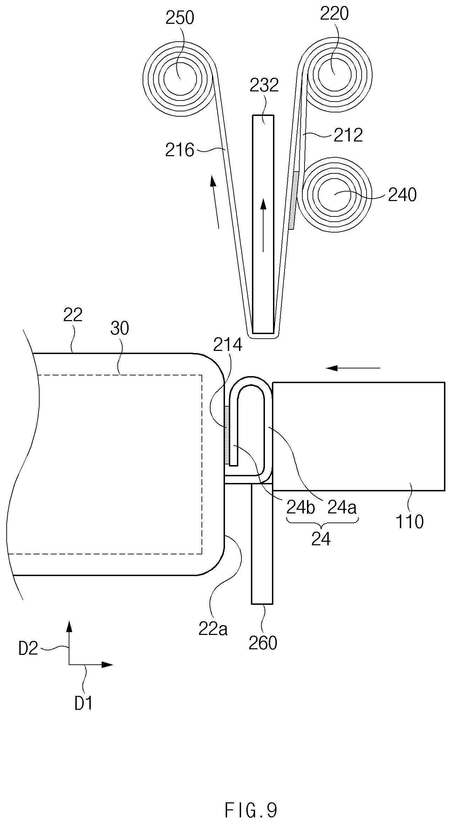

Next, as shown in FIG. 9, as the pressure member 110 moves linearly in the horizontal direction D1 (left-right direction) and presses (secondary pressure) the sealing portion 24, the adhesive tape 214 transferred to the sealing portion 24 may be adhered to the side surface of the pouch body 22. As a result, as shown in FIG. 10, the sealing portion 24 may be fixed to the side surface of the pouch body 22 in a folded state (double-folded state) via the adhesive tape 214.

Although the present disclosure has been described centered on the embodiment hereinabove, this is merely an example and does not limit the present disclosure, and those having ordinary skill in the art will understand that various modifications and applications not exemplified above are possible without departing from the essential characteristics of the present embodiment. For example, each component specifically shown in the embodiment may be modified and implemented. And, the differences related to such modifications and applications should be construed as being included in the scope of the present disclosure defined in the appended claims.

### [List of Reference Numerals]

10: Apparatus for manufacturing pouch for secondary battery
20: Pouch
22: Pouch body
22a: Side surface of pouch body
24: Sealing portion
24a: First sealing portion
24b: Second sealing portion
24c: Target adhesive surface
30: Electrode assembly
100: Pressure portion
110: Pressure member
200: Adhesive tape supply unit
210: Adhesive tape fabric
212: First release sheet
214: Adhesive tape
214a: First adhesive surface
214b: Second adhesive surface
216: Second release sheet
220: Supply roll
230: Fabric transfer unit
232: Elevating member
240: First recovery roll
250: Second recovery roll
260: Support member

## Claims

1. An apparatus for manufacturing a pouch for a secondary battery that comprises a pouch body accommodating an electrode assembly therein and a sealing portion protruding from a side surface of the pouch body along a horizontal direction, the apparatus comprising:
a pressure portion provided to selectively press the sealing portion along a vertical direction so that the sealing portion is bent toward the vertical direction orthogonal to the horizontal direction, and selectively press the sealing portion along the horizontal direction so that the bent sealing portion moves in a direction approaching the pouch body; and
an adhesive tape supply unit that supplies an adhesive tape to a target adhesive surface of the sealing portion facing the side surface of the pouch body,
wherein the adhesive tape is adhered between the target adhesive surface and the side surface of the pouch body as the sealing portion is pressed in the horizontal direction by the pressure portion.

2. The apparatus for manufacturing a pouch for a secondary battery according to claim 1,
wherein the pressure portion comprises a pressure member that is provided to be selectively linearly movable along the vertical direction and the horizontal direction.

3. The apparatus for manufacturing a pouch for a secondary battery according to claim 2,
wherein the pressure member is configured to:
move linearly along the horizontal direction and apply primary pressure to the sealing portion so that the target adhesive surface contacts a first adhesive surface of the adhesive tape while the sealing portion is bent, and then
move linearly along the horizontal direction and apply secondary pressure to the sealing portion so that a second adhesive surface of the adhesive tape adheres to the side surface of the pouch body.

4. The apparatus for manufacturing a pouch for a secondary battery according to claim 2,
wherein the sealing portion comprises:
a first sealing portion protruding from the pouch body along the horizontal direction; and
a second sealing portion connected to an end of the first sealing portion in a bent manner and defining the target adhesive surface,
wherein when the pressure member moves in the vertical direction, the first sealing portion is bent by the pressure member, and the target adhesive surface of the second sealing portion is disposed to face the side surface of the pouch body.

5. The apparatus for manufacturing a pouch for a secondary battery according to claim 3,
wherein the adhesive tape supply unit comprises:
a supply roll that supplies an adhesive tape fabric comprising the adhesive tape, a first release sheet laminated on the first adhesive surface, and a second release sheet laminated on the second adhesive surface;
a fabric transfer unit that selectively transfers the adhesive tape fabric so that the adhesive tape fabric is selectively positioned between the target adhesive surface and the side surface of the pouch body;
a first recovery roll that recovers the first release sheet from the adhesive tape fabric; and
a second recovery roll that recovers the second release sheet from the adhesive tape fabric.

6. The apparatus for manufacturing a pouch for a secondary battery according to claim 5,
wherein the fabric transfer unit comprises an elevating member that is selectively allowed to be raised and lowered from a first position disposed above the target adhesive surface to a second position positioned between the target adhesive surface and the side surface of the pouch body,
wherein when the elevating member is lowered to the second position, the adhesive tape fabric is pressed by the elevating member and is transferred between the target adhesive surface and the side surface of the pouch body, and the adhesive tape is disposed to face the target adhesive surface.

7. The apparatus for manufacturing a pouch for a secondary battery according to claim 6,
wherein the pressure member is configured to move in the vertical direction and bend the sealing portion toward the vertical direction while the elevating member is lowered to the second position.

8. The apparatus for manufacturing a pouch for a secondary battery according to claim 6,
wherein the pressure member is configured to apply the primary pressure to the sealing portion to transfer the adhesive tape from the adhesive tape fabric to the target adhesive surface while the elevating member is lowered to the second position, and
after the elevating member is raised to the first position, the pressure member is configured to apply the secondary pressure to the sealing portion to bond the adhesive tape to the side surface of the pouch body.

9. The apparatus for manufacturing a pouch for a secondary battery according to claim 6, comprising:
a support member facing the elevating member and supporting the bottom surface of the sealing portion.

10. The apparatus for manufacturing a pouch for a secondary battery according to claim 5,
wherein the adhesive tape is cut into preset units and provided in plurality to be spaced apart along the length direction of the adhesive tape fabric.

11. The apparatus for manufacturing a pouch for a secondary battery according to claim 10,
wherein the adhesive tape fabric is provided in the form of a roll wound around the supply roll.

12. A method for manufacturing a pouch for a secondary battery that comprises a pouch body accommodating an electrode assembly therein and a sealing portion protruding from a side surface of the pouch body along a horizontal direction, the method comprising:
a step of vertically pressing the sealing portion along a vertical direction using a pressure member that is provided to be selectively linearly movable along the vertical direction and the horizontal direction so that the sealing portion is bent toward the vertical direction orthogonal to the horizontal direction;
a step of supplying an adhesive tape to a target adhesive surface of the sealing portion facing the side surface of the pouch body; and
a step of horizontally pressing the sealing portion along the horizontal direction using the pressure member so that the bent sealing portion moves in a direction approaching the pouch body,
wherein the adhesive tape is adhered between the target adhesive surface and the side surface of the pouch body as the sealing portion is pressed in the horizontal direction.
